# FASCICULE DE BREVET EUROPEEN

(11) **EP 1 815 754 B1**
(45) Date de publication et mention de la délivrance du brevet: **15.04.2009**
(21) Numéro de dépôt: 06405050.3
(22) Date de dépôt: 02.02.2006
(51) Int. Cl.: A23L 1/236, A23L 2/60

(54) **Sucrant pour alimentation animale**
Süßstoff zum Füttern von Tieren
Sweetener for animal feeding

(43) Date de publication de la demande: 08.08.2007
(73) Titulaire: Pancosma S.A., 1218 Le Grand-Saconnex (CH)
(72) Inventeur: Felisaz, Denis, F-74490 Megevette (FR); Sinet, Nathalie, F-92130 Issy-les-Moulineaux (FR); Thieblemont, Carole, Jouvernex F-74200 Margencel (FR); Tranchant, Jean-Paul, F-74370 Argonay (FR)
(74) Mandataire: Moinas, Michel

(56) Documents cités:
- EP-A- 0 131 640
- WO-A-98/04156
- FR-A- 1 569 456
- US-A- 3 656 973
- US-B1- 6 251 464

## Description

La présente invention se rapporte à un sucrant en poudre destiné à l'alimentation animale et trouve un intérêt tout particulièrement dans l'alimentation de jeunes animaux d'élevage, par exemple le porcelet, le veau et l'agneau

Le sucre, essentiellement constitué de sucrose ou saccharose, est un édulcorant apprécié des animaux mais il présente des inconvénients, notamment son coût relativement élevé, son caractère encombrant, les risques de sa caramélisation lors du chauffage des aliments et la menace du déclenchement de diarrhées lors de sa consommation excessive. Dans de nombreux produits pour alimentation animale, on cherche donc à le remplacer par des sucrants ou édulcorants dont le caractère sensoriel se rapproche du goût du sucre.

Traditionnellement, les sucrants en poudre pour l'alimentation animale sont composés d'un mélange statistique de plusieurs poudres de granulométries très différentes, à savoir d'édulcorants d'une granulométrie relativement grossière et mélangée à un potentiateur se présentant sous forme d'une poudre beaucoup plus fine. L'édulcorant, c'est-à-dire l'agent qui apporte le goût sucré est habituellement de la saccharine ou du saccharinate de sodium ou de calcium, parfois d'autres édulcorants intenses d'origine naturelle ou artificielle.

Le rôle du potentiateur est double. D'abord, comme son nom l'indique, il a comme effet de prolonger la perception du goût sucré qui, en son absence, serait trop fugitive. Un bon potentiateur, tels que ceux utilisés classiquement, permet d'augmenter la perception sucrée dans le temps d'environ 50 à 80 %. L'autre effet du potentiateur, et non des moindres, est de masquer les goûts secondaires ou parasites de l'édulcorant, par exemple de masquer le goût amer et métallique de la saccharine ou de ses sels de sodium et de calcium.

Pour des raisons de commodité de l'exposé uniquement et de meilleure compréhension du problème posé, nous nous référerons plus particulièrement ici à l'alimentation du porcelet, bien que l'invention s'applique à d'autres jeunes animaux d'élevage (ruminants et monogastriques) tels que jeunes bovins, ovins, caprins, équidés, cervidés, etc.

Chez le porcelet, la consommation doit être optimale durant la période de sevrage, afin de faciliter la transition du lait maternel à l'aliment solide. Cette phase s'accompagne d'une vulnérabilité accrue de la santé du porcelet et, pour prévenir les risques d'affection, l'aliment est parfois supplémenté en produits médicamenteux, gustativement répulsifs. On cherchera alors à stimuler son appétit pour qu'il consomme le maximum d'aliment, en lui offrant des rations qui contiennent des sucrants, le jeune animal étant particulièrement friand de la saveur sucrée à laquelle il a été habitué avec le lait de sa mère. Pour fixer les idées, il faut savoir qu'un porcelet sevré de 28 jours, pesant de 6,5 à 8 kg, mange 200 à 300 g par jour d'une nourriture se présentant habituellement sous la forme de granulés. Par bouchée, le porcelet absorbe environ 8 g, soit une cinquantaine de granulés, ce qui est très peu. Mais déjà, à partir de l'âge de 8 jours, on donne l'aliment granulé au porcelet sous la mère pour l'habituer à son futur régime. Il n'en mange que 30 à 40 g par jour, ce qui ne représente qu'une dizaine de granulés par bouchée. Supplémentation médicamenteuse ou pas, on va lui stimuler l'appétit en lui proposant des aliments qui lui flattent le goût et c'est pourquoi l'habitude s'est prise d'utiliser des granulés dans lesquels ont été incorporés des sucrants. Ces granulés d'un poids de l'ordre de 0,15 g pour un diamètre moyen de 0,3 cm et une longueur de 1,5 cm, sont composés d'un sucrant à raison d'environ ¼ en poids dispersé sur un support, à raison d'environ ¾ en poids, qui peut être du dextrose, de la silice, des céréales broyées ou leurs combinaisons. La proportion de saccharine par rapport au potentiateur est de l'ordre de 100 pour 1 à 2 et on ajoute environ 400 g/t de ce mélange dans l'aliment final.

Afin de lever toute ambiguïté dans la terminologie utilisée ci-après, nous utiliserons "sucrant", lorsque le sucrant proprement dit est dispersé dans un support. Cette formulation sucrante, en quelque sorte un condiment comme le sel ou le poivre, sera ensuite incorporée dans l'aliment final.

Les sucrants traditionnels sont des mélanges statistiques d'un ou plusieurs édulcorants et d'un ou plusieurs potentiateurs dont, comme déjà indiqué plus haut, les granulométries sont très différentes. Malgré le soin que l'on peut apporter à leur réalisation, il ne peut en résulter que des mélanges présentant une forte hétérogénéité.

Cette très forte hétérogénéité peut entraîner des variations dans le profil du goût sucré des aliments, une bouchée pouvant présenter un goût sucré à peine perceptible, tandis que la bouchée suivante peut être, elle, trop sucrée voire amère et métallique par suite des difficultés à masquer l'arrière-goût de la saccharine, en dépit de la présence du potentiateur, lorsque celle-ci est en trop forte concentration. Les formulations sucrantes à base de sucrants grossiers ne donnent ainsi que modérément satisfaction.

Pour résoudre ce problème, la demande de brevet WO98/03082 propose un procédé de préparation de sucrant en poudre pour alimentation animale comprenant la préparation d'un mélange en solution d'un édulcorant et d'un potentiateur, puis la pulvérisation de ce mélange par atomisation séchage pour obtenir une poudre. Le sucrant en poudre ainsi obtenu se présente sous forme d'un mélange intime dont la répartition édulcorant/potentiateur est sensiblement homogène, non statistique, et dont la proportion de l'édulcorant par rapport au potentiateur est sensiblement constante et égale d'une particule de poudre à l'autre. Ce document propose différentes compositions de sucrant en poudre dans lesquelles l'édulcorant est choisi dans le groupe comprenant les saccharinates de sodium ou de calcium, la saccharine, l'aspartame, l'acésulfame, les cyclamates et le stévioside, et leurs mélanges, et le potentiateur est choisi dans le groupe comprenant la thaumatine, la néohespéridine dihydrochalcone (NHDC), la glycyrrhizine, et leurs mélanges, la proportion édulcorant/potentiateur étant comprise entre 99,95/0,05 et 85/15, en parties pondérales. Ces compositions de sucrant apportent un progrès important par rapport aux compositions de sucrant traditionnelles car elles apportent un goût constant aux formulations sucrantes obtenues en les dispersant sur un support. Toutefois les compositions divulguées par ce document ont un caractère sensoriel assez éloigné du goût du sucre.

La demande de brevet EP.04405488.0 décrit un sucrant pour alimentation humaine constitué essentiellement de saccharinate de sodium, de NHDC et de vanilline ou d'éthyl-vanilline, dont le caractère sensoriel le rapproche du goût du sucre.

FR-A-1 569 456 divulgue un procédé pour préparer des compositions d'agents édulcorants sous une forme géométrique régulière, ayant l'aspect du sucre en morceaux. WO-A-98/04156 concerne une composition sucrante sous la forme de sucre. US-A-3 656 973 concerne l'utilisation d'un édulcorant à base de glucoside en combinaison avec un autre édulcorant comme la glycyrrhyzine ou la saccharine.

Il existe dans le commerce un sucrant pour alimentation animale au goût intéressant et apprécié des animaux, le Sucram® C-150 de composition suivante : 97,80 % saccharinate de sodium, 0,20 % NHDC, 0.20 % glycyrrhizine ammoniacale, 0,80 % maltol, 0,50 % inosinate de sodium et 0,50 % guanylate de sodium. Ce sucrant est fabriqué selon le procédé décrit dans la demande de brevet WO98/03082. Il est très utile pour stimuler la croissance des animaux, en particulier par exemple des porcelets sevrés. Toutefois, il présente l'inconvénient d'être cher à fabriquer car la NHDC est coûteuse.

Le problème de l'invention est de trouver un autre sucrant pour animaux au goût intéressant qui ne présente pas ces inconvénients.

Ce problème est résolu par l'invention telle que définie par les revendications.

La présente invention est fondée sur la découverte surprenante que pour un édulcorant de type saccharine et un potentiateur à base de glycyrrhizine, le mélange d'un arôme de type maltol et d'un arôme de type vanille, confère au sucrant un goût intéressant et apprécié des animaux.

L'invention concerne un sucrant en poudre pour alimentation animale se présentant sous forme d'un mélange intime dont la répartition édulcorant/potentiateur/arômes est sensiblement homogène, non statistique, et dont la proportion de l'édulcorant par rapport au potentiateur est sensiblement constante et égale d'une particule de poudre à l'autre, caractérisé en ce qu'il comprend, pour 100 parties pondérales de sucrant, au moins 50 parties pondérales d'un édulcorant de type saccharine, au moins 0,15 partie pondérale de glycyrrhyzine, au moins 0,50 partie pondérale d'un arôme de type maltol et au moins 0,75 partie pondérale d'un arôme de type vanille

Le sucrant de l'invention possède un caractère sensoriel proche du sucre, en particulier un goût sucré de longue durée avec rondeur et sensation en bouche et absence d'astringence ou d'arrière-goût métallique ou amer. Il est très utile pour stimuler la croissance des animaux, en particulier par exemple des porcelets sevrés.

L'édulcorant de type saccharine est en général choisi parmi le saccharinate de sodium, le saccharinate de potassium, le saccharinate de calcium, la saccharine, et un mélange de ces substances. Le saccharinate de sodium est particulièrement apprécié.

De préférence le sucrant comprend au moins 70 parties pondérales d'un édulcorant de type saccharine.

L'arôme de type vanille peut être la vanilline, c'est-à-dire le 3-méthoxy-4-hydroxybenzaldéhyde, en général obtenue par extraction de gousses de vanille ou par synthèse à partir du gaïacol par condensation ou de la lignine, l'éthyl-vanilline, c'est-à-dire le 3-éthoxy-4-hydroxybenzaldéhyde, présente dans les gousses de certaines variétés de vanille de Tahiti et habituellement obtenue par voie de synthèse très proche de celle utilisée pour la vanilline, ou un autre dérivé de la vanilline qui a un pouvoir aromatique semblable. De préférence l'arôme de type vanille est choisi parmi la vanilline et l'éthyl-vanilline, la vanilline étant particulièrement appréciée.

L'arôme de type maltol peut être le maltol ou l'éthyl-maltol, le maltol étant particulièrement apprécié.

La glycyrrhizine peut être sous forme de glycyrrhizine ammoniacale, de glycyrrhizine dipotassique ou disodique, ou d'un autre sel de glycyrrhizine. La glycyrrhizine ammoniacale est particulièrement appréciée.

De préférence le sucrant de l'invention comprend comme agent de texture au moins 15 parties pondérales, en particulier au moins 17 parties pondérales-, de maltodextrine. De préférence la maltodextrine a un équivalent dextrose de 4 à 15, de préférence de 7 à 11.

Lorsque l'arôme de type vanille est la vanilline et l'arôme de type maltol est le maltol, le rapport, en poids, entre la quantité de glycyrrhizine et la somme des quantités de vanilline et de maltol est de 0,02 à 0, 10, en particulier de 0,04 à 0,08.

De préférence le sucrant de l'invention est complétement exempt de NHDC, potentiateur coûteux.

Un sucrant intéressant est celui qui est constitué essentiellement, en poids, de 70 à 80 % d'un édulcorant de type saccharine, de 0,15 à 0,35 % de glycyrrhizine, de 0,75 à 4,0 % d'arôme de type vanilline, de 0.5 à 3,0 % d'arôme de type maltol et de 15,0 à 25,0 % de maltodextrine.

Des exemples de compositions d'un tel sucrant particulièrement intéressants au plan sensoriel sont celles qui sont constituées essentiellement, en poids .
- de 70,0 à 80,0 % d'un édulcorant de type saccharine, de 0,15 à 0,35 % de glycyrrhizine, de 1,5 à 4,0 % de vanilline, de 1,0 à 3,0 % de maltol et de 15,0 à 25,0 %, de préférence de 17,0 à 25 %, de maltodextrine, et
- de 73.0 à 77.0 % de saccharinate de sodium, de 0,20 à 0,32 % de glycyrrhizine ammoniacale, de 1,5 à 3,0 % de vanilline, de 1,5 à 2,4 % de maltol et de 17,5 à 23,5 % de maltodextrine.

De préférence, le sucrant en poudre selon l'invention a une granulométrie comprise entre 10 et 130 µm, avec une répartition sensiblement gaussienne.

Le sucrant en poudre selon l'invention peut être préparé très simplement, selon une technologie bien connue en alimentation humaine et dans la technologie de fabrication des arômes, par "micronisation", c'est-à-dire par atomisation et séchage d'un mélange liquide, pulvérisé dans un appareil approprié. Cet appareil peut prendre la forme d'une tour dans laquelle le mélange liquide est admis au sommet par une buse ou une turbine, la poudre atomisée obtenue étant récoltée à la base de la tour. Dans certains cas, si cela s'avère nécessaire, la tour peut être remplie d'un gaz inerte pour éviter les phénomènes d'oxydation.

L'invention concerne aussi le procédé de préparation de ce sucrant, caractérisé en ce qu'on prépare un mélange en solution d'un édulcorant choisi parmi le saccharinate de sodium, le saccharinate de calcium, la saccharine, et un mélange de ces substances et d'un potentiateur comprenant un mélange de glycyrrhyzine, d'un arôme de type maltol et d'un arôme de type vanille, et éventuellement de maltodextrine, puis qu'on pulvérise ce mélange par atomisation séchage pour obtenir une poudre.

Le sucrant en poudre selon l'invention peut être utilisé de deux façons dans l'alimentation des jeunes animaux d'élevage. D'abord, d'une façon classique, le sucrant selon l'invention peut être dispersé sur un support du type dextrose, silice ou céréales broyées par exemple à raison de 10 à 75 parties pondérales de sucrant pour 90 à 25 parties pondérales de support. Sur la base des valeurs usuelles, cela va permettre de constituer un aliment final à une dose moyenne de 200 à 600 g/t, de préférence environ 400 g/t , ce qui correspond à une quantité d'édulcorant de l'ordre de 100 à 150 g/t et de potentiateur de 1,2 à 1,8 g/t sur la base de la dose moyenne de 400 g/t. Il faut bien comprendre que, puisque le sucrant selon l'invention est parfaitement homogène et que la granulométrie de ce sucrant est suffisamment fine, il n'y aura évidemment aucune difficulté à obtenir une formulation sucrante sur support, puis un aliment final, eux aussi parfaitement homogènes.

Une autre possibilité d'utiliser le sucrant selon l'invention est de le dissoudre dans l'eau de boisson destinée au jeune animal, notamment à raison de 200 à 300 g/t, ce sucrant en poudre étant soluble dans l'eau sans difficulté aucune.

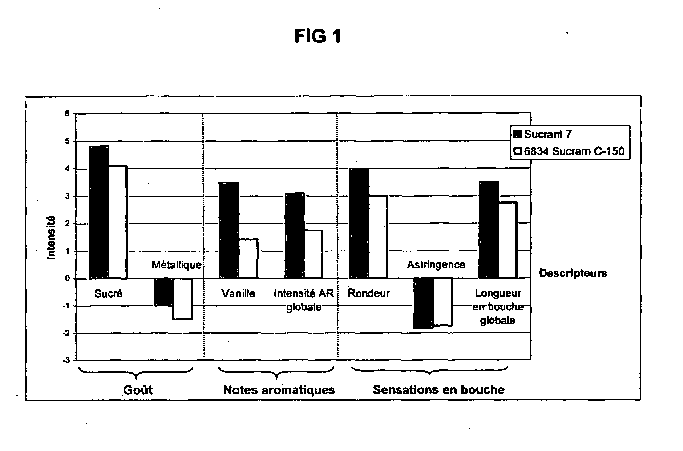

D'autres particularités et avantages de l'invention apparaîtront à la lecture de la description qui va suivre, à caractère illustratif et non limitatif. Cette description sera lue en référence à la Figure 1.

La Figure 1 représente sous forme d'histogrammes les descripteurs goût sucré, goût métallique, goût vanille, intensité aromatique globale, rondeur, astringence et longueur en boûche globale, issus des résultats de l'analyse sensorielle quantitative descriptive (QDA) selon la norme AFNOR NF V 09-016, pour respectivement le sucrant 7 selon l'invention (colonne de gauche) et le sucrant comparatif Sucram® C-150 (colonne de droite).

### 1) Préparation de sucrants selon l'invention

On prépare une solution A de saccharinate de sodium en introduisant 900 litres d'eau dans une cuve, en chauffant jusqu'à 70°C, puis en ajoutant lentement 1000 kg de saccharinate de sodium et en agitant la solution pendant 30 minutes jusqu'à la dissolution complète (la solution devient transparente).

Ensuite, on ajoute lentement la glycyrrhyzine ammoniacale, l'arôme de type maltol, l'arôme de type vanille, et (le cas échéant) la maltodextrine, en quantités correspondant à la composition désirée pour le sucrant en préparation, puis on laisse dissoudre le produit pendant 30 minutes sous agitation à 70 °C.

On verse la solution B lentement dans la solution A.

Lorsque la solution obtenue devient transparente, on procède à l'opération d'atomisation-séchage (spray-drying) dans une tour dont les conditions de travail sont les suivantes:

| | |
|---|---|
| Température de la solution: | 60°C |
| Température d'air entrée: | 180°C |
| Température d'air sortie: | 90°C |

Vitesse de rotation de la turbine d'atomisation : 15'000 tours/min. à 20'000 tours/min, la turbine pouvant être remplacée par une buse d'atomisation.

On obtient ainsi un sucrant selon l'invention, se présentant sous forme d'une poudre fine homogène ayant une granulométrie à répartition sensiblement gaussienne comprise entre 10 et 130 µm avec une moyenne de 48,5 µm et comprenant autour de 75'000'000 particules ou grains par gramme. Cette poudre est soluble dans l'eau.

On a ainsi réalisé les sucrants 1 à 7 selon l'invention dont les compositions sont données, en pourcentages pondéraux, dans le tableau 1 ci-après.

**Tableau 1**

| **SUCRANTS SELON L'INVENTION 1 à 7** | | | |
|---|---|---|---|
| **SUCRANTS DE L'INVENTION** | **EDULCORANT** | **POTENTIATEUR/SUBSTANCES AROMATISANTES/AGENT DE TEXTURE** | **PROPORTIONS % pondéral** |
| 1 | saccharinate de sodium | glycyrrhizine ammoniacale /éthylvanilline et éthylmaltol/maltodextrine | 76.82; 0,26/1,13 et 0,98/20,81 |
| 2 | saccharinate de sodium | glycyrrhizine ammoniacale /vanilline et éthylmaltol /maltodextrine | 75,72 ; 0,26/2,27 et 0,96/20, 79 |
| 3 | saccharinate de sodium | glycyrrhizine ammoniacale /éthylanilline et maltol /maltodextrine | 75.86 ; 0,26/1,13 et 1,92/20, 83 |
| 4 | saccharinate de sodium | glycyrrhizine ammoniacale /vanilline et maltol | 94.45 ; 0,33/2,83 et 2,39 |
| 5 | saccharinate de sodium | glycyrrhizine ammoniacale /vanilline et maltol /maltodextrine | 71.42 ; 0,32/3,78 et 2,74/21,74 |
| 6 | saccharinate de sodium | glycyrrhizine ammoniacale /vanilline et maltol /maltodextrine | 77.73 ; 0,22/1,95 et 1,60/18,50 |
| 7 | saccharinate de sodium | glycyrrhizine ammoniacale /vanilline et maltol /maltodextrine | 75.00 ; 0,26/2,25 et 1,90/20,59 |

### 2) Préparation de Sucram® C-150, sucrant comparatif

On utilise le procédé de préparation décrit ci-dessus mais avec une solution B contenant du NHDC, de la glycyrrhizine ammoniacale, du maltol, de l'inosinate de sodium, du guanylate de sodium de façon à obtenir le Sucram® C-150 de composition suivante : 97,80 % saccharinate de sodium, 0,20 % NHDC, 0.20 % glycerrhizine ammoniacale, 0,80 % maltol, 0,50 % inosinate de sodium et 0,50 % guanylate de sodium.

### 3) Test gustatif de comparaison entre le sucrant de l'invention et le Sucram® C-150

Les sucrants selon l'invention et le Sucram® C-150 ont été dissous dans de l'eau neutre de type Evian de façon à avoir une concentration de 150g/t, et comparés par un comité de 3 personnes choisies pour leur aptitude à identifier et évaluer des propriétés gustatives.

Cette comparaison a permis de montrer pour tous les sucrants de l'invention testés un caractère sensoriel proche du goût du Sucram® C-150, avec, par rapport à ce dernier, une diminution du goût métallique, une augmentation du goût aromatique global et de la longueur en bouche globale, et pour les sucrants 1 à 3 et 5 à 7 une augmentation de la texture en bouche et de la rondeur.

Le sucrant 7 paraît le plus intéressant.

### 4) Test d'analyse sensorielle quantitative descriptive (QDA)en comparaison avec Sucram® C-150

Le sucrant 7 selon l'invention et le Sucram® C-150 ont été mis en solution dans de l'eau de type Evian de façon à avoir respectivement une concentration de 200 g/t et 150 g/t, et soumis aux tests d'analyse sensorielle quantitative descriptive de la Norme AFNOR NF V 09-016.

Ce test consiste en l'attribution par un comité de 6 à 8 personnes choisies pour leur aptitude à identifier et évaluer des propriétés gustatives, pour chacune de ces substances, de notes de 0 à 5 pour chacune de 9 caractéristiques sensorielles importantes pour le goût.

Ces notes sont introduites dans le logiciel Tastel qui fournit pour chaque produit un graphe dénommé "spider web " (toile d'araignée) représentant les notes moyennes attribuées pour ces caractéristiques sensorielles selon 9 axes : "bitter" (amertume), "astringent" (astringence), "metallic" (goût métallique), "caramel-like", (goût de caramel), "vanilla-like" (goût de vanille), "long lasting" (longueur en bouche, mesurée par chronomètre), "duration of the sweetening intensity" (durée de l'intensité sucrante, mesurée par chronomètre), "mouth feeling" (sensation en bouche : si saveurs partout dans la bouche, bonne sensation en bouche ; si saveurs uniquement sur une zone précise de la langue, sensation en bouche faible ou inexistante) et "full-taste" (rondeur: équilibre des saveurs en bouche).

Les principaux résultats sont rassemblés sous forme d'un histogramme qui montre les valeurs des descripteurs goût sucré, goût métallique, goût vanille, intensité aromatique globale, rondeur, astringence et longueur en boûche globale pour le sucrant 7 selon l'invention (colonnes de gauche) et le Sucram® C-150 (colonnes de droite).

Echelle allant de -5 à 5 : échelle négative pour les descripteurs « mauvais goût » et positive pour les descripteurs « bon goût ». En sachant que l'échelle est croissante selon l'intensité du descripteur (0 = absence, 3 = nettement perçu, 5 = très prononcé)

On constate que globalement le sucrant 7 un meilleur goût que le Sucram® C-150.

Il paraît plus sucré pour un même équivalent de sucre.

Il est moins métallique mais la perception reste très faible (échelle 1) et semble légèrement plus astringent (là aussi, le niveau de l'échelle reste bas).

Par contre, il a un goût aromatique (perception rétronasale) plus prononcé, est plus rond et plus long en bouche, ce qui est un avantage par rapport au Sucram® C-150.

### 5) Tests sur porcelets sevrés en comparaison avec le Sucram® C-150

Compte tenu des conditions de stress qui affectent les porcelets sevrés, la stimulation de prise de nourriture est une nécessité pour leur bien être et leur croissance. Le sucrant 7 de l'invention et Sucram® C-150 ont été testés pour leur capacité à stimuler la prise de nourriture et la croissance de ces animaux dans des conditions européennes de production.

Les tests ont été effectués sur 384 porcelets sevrés à l'âge de 3 semaines. Les porcelets ont été nourris pendant les 21 jours suivant le sevrage avec un régime alimentaire souvent utilisé en France à base de 38 % de blé, 12 % d'avoine, 12 % de graines de soja, 11 % de succédané de lait, 8 % de préparation alimentaire à base de soja, 5 % de sous produits de l'industrie des biscuits, 4 % de concentrât de protéine de soja, 3% de protéine de pomme de terre, 0,75 % d'huile de soja et 6,25 % d'un pré-mélange ("premix") constitué d'acides aminés, de vitamines, de minéraux, d'un acidifiant et d'antibiotiques. Le sucrant 7 de l'invention ou Sucram® C-150 ont été introduits dans cette nourriture à raison de 150 g/t. La prise de nourriture a été mesurée sur les périodes de jour 0 à jour 7 et de jour 7 à jour 21. Le poids des porcelets a été mesuré au jours 0, 7 et 21. Le prise de poids quotidienne moyenne (en g/jour), la prise de nourriture quotidienne moyenne (en g/jour) et l'indice de conversion de consommation, rapport entre la prise de nourriture et la prise de poids, ont été calculés.

Le Tableau 2 rassemble les résultats obtenus sur les porcelets pesant en moyenne 6,8 kg.

**Tableau 2**

| | Témoin | Sucram® C-150 | Sucrant 7 |
|---|---|---|---|
| Poids initial(kg) | 6,8 | 6,9 | 6,8 |
| Poids final (kg) | 14,2^{b} | 14,5^{ab} | 15,0^{a} |
| Gain de poids (g/jour) | 353^{b} | 361^{ab} | 391^{a} |
| Prise de nourriture (g/jour) | 409 | 410 | 418 |
| Indice de conversion de consommation | 1,15^{B} | 1,13^{AB} | 1,08^{A} |

| | | | |
|---|---|---|---|
| ^{A,B} : seuil de confiance p<0.05 ^{a,b} : seuil de confiance p<0.01 | | | |

Ces résultats montrent :
- le sucrant de l'invention comme le Sucram®C-150 favorisent significativement (seuil de confiance de 99%) la prise de poids par rapport au témoin (pas de sucrant ajouté), cet effet étant significativement supérieur (seuil de confiance de 99%) pour le sucrant de l'invention par rapport au Sucram® C-150, et
- le sucrant de l'invention comme le Sucram® C-150 favorisent significativement (seuil de confiance de 95%) l'amélioration de l'indice de conversion de consommation (indice plus proche de 1) par rapport au témoin, cet effet étant significativement supérieur (seuil de confiance de 95%) pour le sucrant de l'invention par rapport au Sucram® C-150.

Le sucrant de l'invention a donc une efficacité supérieure au Sucram® C-150 pour favoriser la croissance des porcelets sevrés.

## Revendications

1. Sucrant en poudre pour alimentation animale se présentant sous forme d'un mélange intime dont la répartition édulcorant/potentiateur/arômes est sensiblement homogène, non statistique, et dont la proportion de l'édulcorant par rapport au potentiateur est sensiblement constante et égale d'une particule de poudre à l'autre, **caractérisé en ce qu'**il comprend, pour 100 parties pondérales de sucrant, au moins 50 parties pondérales d'un édulcorant de type saccharine, au moins 0,15 partie pondérale de glycyrrhyzine, au moins 0,50 partie pondérale d'un arôme de type maltol et au moins 0,75 partie pondérale d'un arôme de type vanille.

2. Sucrant selon la revendication 1 **caractérisé en ce qu'**il comprend comme agent de texture au moins 15 parties pondérales, de préférence au moins 17 parties pondérales, de maltodextrine.

3. Sucrant selon la revendication 1, **caractérisé en ce que** l'arôme de type vanille est choisi parmi la vanilline et l'éthylvanilline.

4. Sucrant selon l'une des revendications précédentes **caractérisé en ce que** l'arôme de type maltol est choisi parmi le maltol et l'éthylmaltol.

5. Sucrant selon l'une des revendications précédentes **caractérisé en ce qu'**il est constitué essentiellement, en poids, de 70 à 80 % d'un édulcorant de type saccharine, de 0,15 à 0,35 % de glycyrrhizine, de 0,75 à 4,0 % d'arôme de type vanillin, de 0.5 à 3,0 % d'arôme de type maltol et de 15,0 à 25,0 % de maltodextrine.

6. Sucrant selon l'une des revendications précédentes, **caractérisé en ce que** l'arôme de type vanille est la vanilline et l'arôme de type maltol est le maltol, le rapport, en poids, entre la quantité de glycyrrhizine et la somme des quantités de vanilline et de maltol est de 0,02 à 0, 10, en particulier de 0,04 à 0,08.

7. Sucrant selon l'une des revendications précédentes, **caractérisé en ce qu'**il est constitué essentiellement, en poids, de 70,0 à 80,0 % d'un édulcorant de type saccharine, de 0,15 à 0,35 % de glycyrrhizine, de 1,5 à 4,0 % de vanilline, de 1,0 à 3,0 % de maltol et de 15,0 à 25,0 %, de préférence de 17,0 à 25 %, de maltodextrin.

8. Sucrant selon la revendication 7, **caractérisé en ce qu'**il est constitué essentiellement, en poids, de 73.0 à 77.0 % de saccharinate de sodium, de 0,20 à 0,32 % de glycyrrhizine ammoniacale, de 1,5 à 3,0 % de vanilline, de 1,5 à 2,4 % de maltol et de 17,5 à 23,5 % de maltodextrine.

9. Procédé de préparation d'un sucrant selon l'une des revendications précédentes, **caractérisé en ce qu'**on prépare un mélange en solution d'un édulcorant choisi parmi le saccharinate de sodium, le saccharinate de calcium, la saccharine, et un mélange de ces substances et d'un potentiateur comprenant un mélange de glycyrrhyzine, d'un arôme de type maltol et d'un arôme de type vanille, et éventuellement de maltodextrine, puis qu'on pulvérise ce mélange par atomisation séchage pour obtenir une poudre.

10. Formulation alimentaire sucrante en granulés, **caractérisé en ce qu'**elle comprend un sucrant selon l'une des revendications 1 à 8 dispersé sur un support du type dextrose, silice ou amidon à raison de 10 à 75 parties pondérales de sucrant pour 90 à 25 parties pondérales de support.

## Claims

1. Powdered sweetener for animal feed presented in the form of an intimate mixture whose edulcorant/potentiator/aromas distribution is markedly homogeneous, not statistical, and whose proportion of edulcorant in relation to the potentiator is significantly constant and equal from one particle of powder to another, **characterised in that** it comprises for 100 parts by weight of sweetener, at least 50 parts by weight of a saccharine-type edulcorant, at least 0.15 parts by weight of glycyrrhizine, at least 0.50 parts by weight of a maltol-type aroma and at least 0.75 parts by weight of a vanilla-type aroma.

2. Sweetener according to claim 1 **characterised in that** it includes as a textural agent at least 15 parts by weight, preferably at least 17 parts by weight of maltodextrin.

3. Sweetener according to claim 1 **characterised in that** the vanilla-type aroma is selected from vanillin and ethyl vanillin.

4. Sweetener according to one of the previous claims **characterised in that** the maltol-type aroma is selected from maltol and ethyl maltol.

5. Sweetener according to one of the previous claims **characterised in that** it consists essentially, by weight, of 70 to 80% of a saccharine-type edulcorant, 0.15 to 0.35% glycyrrhizine, 0.75 to 4.0% vanillin-type aroma, 0.5 to 3.0% maltol-type aroma and 15.0 to 25.0% maltodextrin.

6. Sweetener according to one of the previous claims **characterised in that** the vanilla-type aroma is vanillin and the maltol-type aroma is maltol, the ratio, in weight, between the quantity of glycyrrhizine and the sum of the quantities of vanillin and maltol is between 0.02 and 0.10, more particularly from 0.04 to 0.08.

7. Sweetener according to one of the previous claims **characterised in that** it consists essentially, by weight, of 70.0 to 80.0% of a saccharine-type edulcorant, 0.15 to 0.35% of glycyrrhizine, 1,5 to 4.0% vanillin, 1.0 to 3.0% maltol and 15.0 to 25.0%, preferably 17.0 to 25.0%, maltodextrin.

8. Sweetener according to claim 7, **characterised in that** it consists essentially, by weight, of 73.0 to 77.0% sodium saccharinate, 0.20 to 0.32% ammoniacal glycyrrhizine, 1.5 to 3.0% vanillin, 1.5 to 2.4% maltol and 17.5 to 23.5% maltodextrin.

9. Process of preparation of a sweetener according to one of the previous claims, **characterised in that** the preparation consists of a mixture in solution of an edulcorant selected from sodium saccharinate, calcium saccharinate, saccharine and a mixture of these substances and of a potentiator comprising a mixture of glycyrrhizine, a maltol-type aroma and a vanilla-type aroma, and if applicable maltodextrin, the mixture then being spray dried to obtain a powder.

10. Granulated feed sweetener formulation, **characterised in that** it includes a sweetener according to one of claims 1 to 8 dispersed on a dextrose-type, silica-type or starch-type substrate in the proportion of 10 to 75 parts by weight o sweetener for 90 to 25 parts by weight of substrate.

## Patentansprüche

1. Süßungsmittel in Pulverform für Tiernahrung, das in Form einer Einzelmischung angeboten wird, deren Aufteilung Süßstoff/Verstärker/Aromastoffe merklich homogen und nicht statistisch ist; darüber hinaus ist das Verhältnis zwischen Süßstoff und Verstärker merklich konstant und von einem zum anderen Pulverpartikel gleich, **dadurch gekennzeichnet, dass** es auf 100 Gewichtsanteile Süßungsmittel mindestens 50 Gewichtsanteile eines Süßstoffes des Typs Saccharin, mindestens 0,15 Gewichtsanteile Glycyrrhyzin, mindestens 0,50 Gewichtsanteile eines Aromastoffes des Typs Maltol und mindestens 0,75 Gewichtsanteil eines Aromastoffes des Typs Vanille umfasst.

2. Süßungsmittel gemäß Anspruch 1, **dadurch gekennzeichnet, dass** es als Strukturfestiger mindestens 15 Gewichtsanteile - vorzugsweise mindestens 17 Gewichtsanteile Maltodextrin - umfasst.

3. Süßungsmittel gemäß Anspruch 1, **dadurch gekennzeichnet, dass** für den Aromastoff des Typs Vanille Vanillin und Ethylvanillin verwendet wird.

4. Süßungsmittel gemäß einem der vorangehenden Ansprüche, **dadurch gekennzeichnet, dass** für den Aromastoff des Typs Maltol Maltol und Ethylmaltol verwendet wird.

5. Süßungsmittel gemäß einem der vorangehenden Ansprüche, **dadurch gekennzeichnet, dass** es im Wesentlichen in Bezug auf die Gewichtsanteile 70% bis 80% Süßstoff des Typs Saccharin, 0,15% bis 0,35% Glycyrrhyzin, 0,75% bis 4,0% Aromastoff des Typs Vanillin, 0,5% bis 3% Aromastoff des Typs Maltol und 15% bis 25% Maltodextrin umfasst.

6. Süßungsmittel gemäß einem der vorangehenden Ansprüche, **dadurch gekennzeichnet, dass** es sich bei dem Aromastoff des Typs Vanille um Vanillin handelt und bei dem Aromastoff des Typs Maltol um Maltol handelt, wobei das Gewichtsverhältnis zwischen der Glycyrrhyzinmenge und der Summe der Vanillin- und Maltolmenge 0,02 bis 0,10 - im speziellen Fall 0,04 bis 0,08 - beträgt.

7. Süßungsmittel gemäß einem der vorangehenden Ansprüche, **dadurch gekennzeichnet, dass** es im Wesentlichen in Bezug die Gewichtsanteile 70% bis 80% Süßstoff des Typs Saccharin, 0,15% bis 0,35% Glycyrrhyzin, 1,5% bis 4,0% Vanillin, 1,0% bis 3% Maltol und 15% bis 25% - vorzugsweise 17,0% bis 25% - Maltodextrin umfasst.

8. Süßungsmittel gemäß Anspruch 7, **dadurch gekennzeichnet, dass** es im Wesentlichen in Bezug die Gewichtsanteile 73,0% bis 77,0% Saccharinnatrium, 0,20% bis 0,32% Ammoniak- Glycyrrhyzin, 1,5% bis 3,0% Vanillin 1,5% bis 2,4% Maltol und 17,5% bis 23,5% Maltodextrin umfasst.

9. Aufbereitungsverfahren für ein Süßungsmittel gemäß einem der vorangehenden Ansprüche, **dadurch gekennzeichnet, dass** eine Lösung eines Süßungsmittels bestehend aus Saccharinnatrium, Saccharinkalzium, Saccharin und eine Mischung dieser Substanzen und eines Verstärkers bestehend aus einer Mischung aus Glycyrrhyzin, einem Aromastoff des Typs Maltol, einem Aromastoff des Typs Vanille und ggf. Maltodextrin vorbereitet wird, und dass diese Mischung im Anschluss durch Sprühtrocknung zwecks Erhalt eines Pulvers pulverisiert wird.

10. Süßende Lebensmittelformulierung in Form von Granulat, **dadurch gekennzeichnet, dass** sie ein Süßungsmittel gemäß einem der Ansprüche 1 bis 8 umfasst, die auf eine Trägersubstanz des Typs Dextrose, Siliziumdioxid oder Stärke zu 10 bis 75 Gewichtsanteilen des Süßungsmittels auf 90 bis 25 Gewichtsanteilen der Trägersubstanz dispergiert wird.
